(19) Europäisches Patentamt / European Patent Office / Office européen des brevets

(11) **EP 3 071 033 B1**

(12) **EUROPEAN PATENT SPECIFICATION**

(45) Date of publication and mention of the grant of the patent:
**10.07.2019 Bulletin 2019/28**

(21) Application number: **14815041.0**

(22) Date of filing: **19.11.2014**

(51) Int Cl.:
*A01N 25/04* (2006.01)          *A01N 25/08* (2006.01)
*A01N 25/12* (2006.01)          *A01N 59/02* (2006.01)
*A01N 59/20* (2006.01)          *A01P 3/00* (2006.01)

(86) International application number:
**PCT/IB2014/066159**

(87) International publication number:
**WO 2015/075645 (28.05.2015 Gazette 2015/21)**

(54) **USE OF HYDROXYAPATITE AS A CARRIER OF BIOACTIVE SUBSTANCES FOR TREATING GRAPEVINE TRUNK DISEASES**

VERWENDUNG VON HYDROXYAPATIT ALS TRÄGER VON BIOAKTIVEN STOFFEN ZUR BEHANDLUNG VON HOLZKRANKHEITEN DER WEINREBE

UTILISATION D'HYDROXYLAPATITE EN TANT QUE VECTEUR DE SUBSTANCES BIOACTIVES POUR LE TRAITEMENT DE MALADIES DU TRONC DE LA VIGNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.11.2013  FR 1361357**
**28.03.2014  FR 1452749**
**28.03.2014  FR 1452750**

(43) Date of publication of application:
**28.09.2016  Bulletin 2016/39**

(73) Proprietor: **NDG Natural Development Group S.r.l.**
**40013 Castel Maggiore (Bologna) (IT)**

(72) Inventors:
 • **MANFREDINI, Gianluca**
 **I-40013 Castel Maggiore (Bologna) (IT)**
 • **MERCURI, Rocco**
 **I-06031 Bevagna (Perugia) (IT)**
 • **ROVERI, Norberto**
 **I-40133 Bologna (IT)**
 • **LELLI, Marco**
 **I-40063 Monghidoro (Bologna) (IT)**
 • **MORSELLI, Silvana**
 **I-40050 Case Speltra (Bologna) (IT)**
 • **CECCHINI, Alice**
 **I-40045 Ponte della Venturina (Bologna) (IT)**
 • **PIVA, Massimo**
 **I-40013 Castel Maggiore (Bologna) (IT)**

(74) Representative: **Biggi, Cristina**
**Bugnion S.p.A.**
**Viale Lancetti 17**
**20158 Milano (IT)**

(56) References cited:
**EP-A1- 0 640 284     WO-A1-2007/137606**
**CH-A- 261 897        FR-A- 896 465**
**RO-B1- 122 830**

 • **DATABASE WPI Week 199213 Thomson Scientific, London, GB; AN 1992-102146 XP002727010, & JP H04 46105 A (SANGI KK) 17 February 1992 (1992-02-17) cited in the application**
 • **STANIC V ET AL: "Synthesis, characterization and antimicrobial activity of copper and zinc-doped hydroxyapatite nanopowders", APPLIED SURFACE SCIENCE, ELSEVIER, AMSTERDAM, NL, vol. 256, no. 20, 1 August 2010 (2010-08-01), pages 6083-6089, XP027076744, ISSN: 0169-4332, DOI: 10.1016/J.APSUSC.2010.03.124 [retrieved on 2010-06-04]**
 • **MAYER I ET AL: "Zinc ions in synthetic carbonated hydroxyapatites", ARCHIVES OF ORAL BIOLOGY, PERGAMON PRESS, OXFORD, GB, vol. 39, no. 1, 1 January 1994 (1994-01-01), pages 87-90, XP026167604, ISSN: 0003-9969, DOI: 10.1016/0003-9969(94)90040-X [retrieved on 1994-01-01]**

- **PLATZER VERENA ET AL: "In vitro-Wirkung von Fungiziden auf Fomitiporia mediterranea und Phaeomoniella chlamydospora, die Erreger der Esca-Krankheit der Rebe", MITTEILUNGEN KLOSTERNEUBURG REBE UND WEIN, OBSTBAU UNDFRUECHTENVERWERTUNG, KLOSTERNEUBURG, DE, vol. 59, no. 2, 1 January 2009 (2009-01-01), pages 74-83, XP009149096, ISSN: 0007-5922**

Remarks:

The file contains technical information submitted after the application was filed and not included in this specification

**Description**

FIELD OF THE INVENTION

The present invention relates to the use of carbonate-substituted hydroxyapatite comprising at least one bioactive molecule for the treatment of grapevine trunk diseases, in particular esca disease.

BACKGROUND ART

Esca is a very disease of vines, caused by the action of various fungi that attack the wood of the host plant and cause significant damage. The disease has spread to almost every wine-growing regions of the world and causes substantial economic losses, especially when the young plants are affected.

Unlike other fungal diseases such as powdery mildew and downy mildew, for example, esca is caused by the colonization of several different species of fungi. The syndrome appears after pioneer fungi and secondary fungi in association degrade wood in a complementary manner until the appearance of visible signs. The main agents responsible for the disease include Phaeomoniella chlamydospora (Pch), Phaeoacremonium aleaphilum (Pal) and Fomitiporia mediterranea (fomed), but about a hundred distinct morphological types of colonizer fungi have been identified to date. The fungi are spread by spores that contaminate especially pruning wounds, but spores can also be carried by the wind for miles.

It seems that both fungi Pch and Pal cause a latent infection in the host, which causes symptoms only when the host is in a state of stress. Deterioration caused by these fungi affect the wood of the trunk and branches through the production of enzymes that break down lignin and cause the degradation of stem wood which eventually leads to the formation of a spongy, crumbly mass of yellowish-white colour ("white rot").

Esca is a set of diseases. The simultaneous presence or absence of different species of fungi that are active in different parts of the same plant at the same time can indeed lead to overlapping or successions of different diseases: black measles on young shoots, Petri disease, esca young, white rot. When the plant is affected by all the symptoms of the disease, the term "proper esca" is used.

The chronic form of the disease characterized by a slow and gradual desiccation of shoots, manifested externally by changes of all kinds affecting green organs of the plant, accompanied by internal injuries of the wood, trunk and branches.

Symptoms, which appear in early summer, are often limited to a few branches and progress from the base to the top of the stem. In the summer, the infection intensifies and causes premature leaf drop.

In the woods, we first noted the appearance of black longitudinal veins which can then be accompanied by various browning of the wood. Then white rot appears and in the most affected vineyards, rotten wood splits with deep longitudinal fissures.

On the affected bunches, just before vintage, clusters of purplish-brown spots appear in an uneven distribution at the junction to form large longitudinal strips. The spots do not affect the skin of the fruit, and usually only a few berries per cluster. Often, the grapes also show symptoms of wilting. In severe cases, the grape can soften, tear and have longitudinal cracks. The altered berries mummified, to the point that those with slots can be invaded by insects and rot.

The acute syndrome is named apoplexy: vines affected by this form of the disease may show, in the month of June, the sudden wilting of the foliage and/or bunches.

All species of vines are likely to be affected, but among the best-known varieties, those that are most sensitive to esca are: Cabernet Sauvignon, Cabernet Franc, Sauvignon Blanc, Ugni Blanc, Colombard, Merlot and Chardonnay.

Given the disastrous consequences of this disease for winegrowers, an effective solution to prevent and fight against esca is constantly searched.

Sodium arsenite, which is considered the only synthetic product that can counteract this disease, acts by accumulating in tissues and possibly altering the development of fungi, with a mode of action still poorly understood. Because of its high toxicity, the product was withdrawn from the market and since then no effective solution has been found against esca.

Several triazole products, also known as the "inhibitors of ergosterol biosynthesis" have been studied, but their effectiveness is limited. In particular, the reduction of events was found to be temporary, limited to the first 3-4 years of treatment, beyond which no significant differences were found between the treated and control vines.

Further studies were carried out using a product based on fosetyl Al, a systemic fungicide normally used against Plasmopara viticola. It interferes with the metabolism of the pathogen, but the results show that the confinement of the onset of symptoms is closely related to the general good condition of the vine rather than the direct action of the pesticide on the fungi causing esca.

Given the lack of an effective active ingredient to treat the disease, preventive measures have been put in place to prevent the development of esca in nurseries and vineyards. These measures consist mainly using healthy multiplication materials and the establishment of special phytosanitary measures for the production of rooted cuttings in nurseries, and for the size and suckering vines, so as to limit the appearance of first infections through generated wounds.

In addition, to prevent transmission of the disease it necessary to mark the vines that show suspicious symptoms during the summer. It is also necessary to remove the vine shoots and uproot the infected plants to prevent the persistence of foci of infection in the vineyard. This is the technique of "cut back" that aims to eliminate the parts of wood already invaded by pathogens and regenerate the land concerned.

In the nursery, it is possible to use hot water at different temperatures in different parts of the supply chain (before and after storage in the warehouse, before and after hydration, etc.) to eliminate pathogen fungi by a sudden increase in temperature, without damaging the young plants. This technique is not always completely effective and is particularly compelling because it requires specific tests because not all varieties react the same way to treatment with hot water.

More recently, treatment with biological agents have been proposed. The method is to use microbial agents isolated from their natural environment, capable of fighting against the development of a pathogen by different mechanisms: antibiosis, competition or hyperparasitism. In particular, fungi of the genus Trichoderma are likely to play the antagonist role at different stages of the production of rooted cuttings; they seem to produce favourable conditions in the plant, mainly due to an increase in the quality and quantity of the root. Regarding the ability to protect against pruning wounds, fungal antagonists, sprinkled on fresh cuts allows a gradual decrease in the disease, but they must be kept on the wound until 60 days after application, and over a period of eight weeks to see a reduction but not a disappearance. The effectiveness of these treatments is therefore not satisfactory and is very restrictive.

There is thus a need for a product and a method to prevent and fight effectively against grapevine trunk diseases, in particular esca disease, both in nurseries and vineyards.

Carriers of stoichiometric hydroxyapatite are known from JPH0556105 which describes the use of hydroxyapatite as a carrier for an antimicrobial metal ion selected from silver, copper and zinc to sterilize a soil from the presence of the plant pathogenic fungus Pythium. The action of the antimicrobial metal ion is limited to the soil since the publication specify that the agent is hardly absorbed into the plant.

EP0640284 describes an antimicrobial sand coated with a stoichiometric hydroxyapatite carrier containing antimicrobial agents, such as silver, copper or zinc ions. The antimicrobial sand is mixed with the soil used to grow flowering plants, such as orchids, cyclamen etc., to sterilize the soil against the fungi: Rhizoctonia, Fusarium, Sclerotinia and Pyshium.

EP2029480 describes the use of hydroxyapatite for dental applications, oral hygiene or dental reconstruction, in the form of biologically active nanoparticles based on a carbonate substituted non-stoichiometric hydroxyapatite having a given crystallinity degree CD and aspect ratio AR (length/width).

Hydroxyapatite is well known in the prior art in different forms and for different applications. For example, synthetic hydroxyapatite constitutes an excellent biomaterial for biomedical applications, notably for bone reconstruction. Hydroxyapatite and synthetic substituted hydroxyapatite can be produced by different processes, by wet, hydrothermal, electrochemical, sol-gel or solid state synthesis. It can be found in different stoichiometric, morphological and crystalline forms. Hydroxyapatite has never been used as a carrier of bioactive molecules for the treatment of grapevine trunk diseases, in particular esca disease of the vines.

Platzer et al. describes the effect of a series of known fungicides on *Fomitiporia mediterrranea* and *Phaeomoniella chlamydospora* in grapevines (Platzer et al. "In vitro-Wirkung von Fungiziden auf F. mediterranea & P. chlamydospora, Erreger der Esca-Krankheit der Rebe", Mitteil. Klosterneuburg Rebe & Wein, Obstbau & Früchtenverwert., vol. 59, no. 2, 1 Jan. 2009, p. 74-83).

SUMMARY OF THE INVENTION

With respect to the known use of stoichiometric hydroxyapatite (i.e. hydroxyapatite base on calcium-phosphate ions not substituted by other ions), having the formula:

$$Ca_{10}(PO_4)_6(OH)_2$$

as a carrier of metal ions for sterilizing soil used to grow plants, the present invention provides the use of carbonate-substituted hydroxyapatite comprising bioactive molecules for treating grapevine trunk diseases, in particular esca disease, more particularly of esca disease of the vines. Preferably, the carbonate-substituted hydroxyapatite is in microcrystalline form, i.e. in the form of aggregates.

The carbonate-substituted hydroxyapatite comprises at least one bioactive molecule . The carbonate-substituted hydroxyapatite of the invention is applied on the plants affected by grapevine trunk diseases, in particular esca disease, and penetrates into the plants through natural openings, as explained in details below, thus realizing an intimate contact with pathogen cells that can be present both on the plant surface or inside the plant.

Prior art JPH0556105 and EP 0 640 284 does not describe the use of hydroxyapatite as carrier of bioactive molecules for the treatment of esca disease of vines.

With "bioactive molecule" in the present invention it is intended to refer to substances having an anti-parasite activity, preferably anti-fungal activity. The bioactive molecule can be a small organic molecule and/or a metal ion. Preferably the bioactive molecule is a metal ion, such as Cu, Zn, P, Ca and S. Such ions have an anti-parasite action (notably an anti-fungal activity). Other examples of bioactive molecules useful for the purposes of the invention are essential oils of plant origin, such as mint, thyme, rosemary, sesame, soya, cloves, garlic, lemon or cinnamon.

Esca is a definition that includes a set of diseases. The simultaneous presence or absence of different species of fungi that are active in different parts of the same plant at the same time can indeed lead to overlapping or successions of different diseases: black measles on young shoots, Petri disease, esca young, white rot. When the plant is affected by all the symptoms of the disease, the term "proper esca" is used.

The invention refers also to a carrier of bioactive molecules for treatment of grapevine trunk diseases, in particular esca of the vines, made of hydroxyapatite substituted with at least a carbonate ion having a degree of crystallinity comprised between 25 and 59%, preferably between 25 and 40%. The carbonate substitution can be a substitution of phosphate ions (site B) and/or of hydroxyl ions (site A) of hydroxyapatite; preferably the carbonate substitution is a substitution of phosphate ions (site B).

The carbonate substitution has the advantage to lower the crystallinity degree of hydroxyapatite, which thus become more amorphous. The amorphous state leads to an increase of solubility of the hydroxyapatite structure in a biological environment, with the advantage that the active principle release is improved and becomes more effective.

The invention refers also to carbonate-substituted hydroxyapatite having the above characteristics, comprising a bioactive molecule adsorbed thereto, thus yielding a functionalized hydroxyapatite.

For the scope of the present invention, "carbonate-substituted hydroxyapatite functionalized with a bioactive molecule" is a definition equivalent to say that the bioactive molecule is adsorbed on the carbonate-substituted hydroxyapatite.

BRIEF DESCRIPTION OF THE DRAWINGS

Fig. 1 shows the efficacy against Fomitiporia mediterranea (Fm) after 15 days of incubation with testing agents at concentration = 5%; it was reported the totally inhibition of the colony growth comparing to the control and the comparison agent based on copper. From left: control, Bordeaux mixture, MDE1, MDE2 and MDE3.

Fig. 2 shows the efficacy against Fomitiporia mediterranea (Fm) after 15 days of incubation with testing agents at concentration = 2.5%; it was reported the totally inhibition of the colony growth comparing to the control and the comparison agent based on copper. From left: Bordeaux mixture, MDE1, MDE2 and MDE3; the control is the same as Fig.1;

Fig. 3 shows the efficacy against Phaeomoniella chlamydospora (Pch) after 15 days of incubation with testing agents at concentration = 10%. From left: control, Bordeaux mixture, MDE2, MDE3 and MDE1.

Fig. 4 shows the efficacy against Phaeomoniella chlamydospora (Pch) after 21 days of incubation with testing agents at concentration = 2.5%; it was reported the totally inhibition of the colony growth comparing to the control and the comparison agent based on copper. From left: control, Bordeaux mixture, MDE1, MDE3 and MDE2.

Fig. 5 shows the efficacy against Phaeoacremonium aleophilum (Pal) after 28 days of incubation with testing agents at concentration = 2.5%. From left (over): Bordeaux mixture and control; (under) MDE1, MDE2, MDE3.

Fig. 6 shows the efficacy against Phaeoacremonium aleophilum (Pal) after 28 days of incubation with testing agents at concentration = 5% (a) and 10% (b). From left (over): Bordeaux mixture and control; (under) MDE1, MDE2, MDE3.

Fig. 7 shows the reduction on the growth of Phaeoacremonium aleophilum (Pal) after 28 days of incubation with MDE2 at growing concentration from left in comparison with the control (left).

DETAILED DESCRIPTION OF THE INVENTION

The present invention relates to the use of carbonate-substituted hydroxyapatite comprising bioactive molecules intended for treating grapevine trunk diseases, in particular esca disease, more particularly of esca disease of the vines.

In a preferred embodiment, the hydroxyapatite carrier of the invention is substituted by at least a carbonate ion, and has the following formula:

$$Ca_{(10)}(PO_4)_{(6-y)}(CO_3)_y(OH)_2$$

wherein y is a number comprised between 0.002 and 0.030, and having a crystallinity degree comprised between 25 and 59%, preferably between 25 and 40%.

In a further preferred embodiment of the invention, the carbonate substitution can occupy site B ($PO_4^{3-}$ phosphate ions) as per general formula above and/or site A (OH hydroxyl ions) of the hydroxyapatite. The ratio of substitution on site A/substitution on site B is comprised between 0.10 and 0.60 and even more preferably the ratio is comprised between 0.20 and 0.40.

In the carbonate-substituted hydroxyapatite structure considered in the present invention, the substitution is preferably on site B, with a percentage of carbonate occupying the B site that is greater than or equal to 55% in weight, even more preferably comprised between 90 and 100% in weight of the total weight of carbonate contained in the carbonate-substituted hydroxyapatite.

The overall content of carbonate in the carbonate-substituted hydroxyapatite according to the invention is from 1 to 20%, preferably from 5 to 15% in weight of the total carbonate-substituted hydroxyapatite structure.

The carbonate ion substitutions, preferably at site B, are very significant since they allow the whole hydroxyapatite structure to increase its solubility in a biological environment.

Preferably, the carbonate-substituted hydroxyapatite carrier is in the form of particles smaller than 2 $\mu$m, preferably sized between 0.2 and 0.9 $\mu$m. The carbonate-substituted hydroxyapatite particles are preferably in crystalline form, i.e. they are joined together to create aggregates of carbonate-substituted hydroxyapatite particles (also referred to in this application as "clusters" or "crystals" or "microcrystals" or "microcrystalline aggregates", all these terms having the same meaning as "aggregates" according to the invention). These aggregates have micrometric dimensions, with a size comprised between 0.5 and 25 $\mu$m, more particularly between 0.5 and 5 $\mu$m and having a significant surface area. In particular, carbonate-substituted hydroxyapatite aggregates useful according to the present invention have a surface area comprised between 60 and 120 $m^2$/g, more particularly between 70 and 90 $m^2$/g.

The aggregates of carbonate-substituted hydroxyapatite have the advantage of a larger surface area with respect to single carbonate-substituted hydroxyapatite particles and therefore allows adsorbing more bioactive molecules and controlling the release of them in the environment. Thus for a small quantity of carbonate-substituted hydroxyapatite it is possible to transport a significant number of bioactive molecules which allows the activity and biological effectiveness of the molecules to be increased further.

The bioactive molecules having anti-fungal activity used in the present invention can be both small organic molecules or metal ions. Preferably the bioactive molecules are: metal ions, such as Cu, Zn, P, Ca and S. Such ions have an anti-parasite action (notably an anti-fungal activity). Other examples of bioactive molecules useful for the purposes of the invention are essential oils of plant origin, such as mint, thyme, rosemary, sesame, soya, cloves, garlic, lemon or cinnamon.

The bioactive molecules are adsorbed on to the carbonate-substituted hydroxyapatite carrier, thus obtaining a functionalized carbonate-substituted hydroxyapatite.

The absorption of such substances on carbonate-substituted hydroxyapatite can be performed by all processes known to a person skilled in the art. The crystallised carbonate-substituted hydroxyapatite aggregate has an inner zone that is purely crystalline and an outer peripheral zone with electrical charges that are not completely neutral, which allows the bioactive molecules to be retained.

For example, in the case of adsorption of copper and/or sulphur on carbonate-substituted hydroxyapatite particles, the functionalization of carbonate-substituted hydroxyapatite can therefore be obtained:

- for copper starting from: sulfate (II) pentahydrate, copper chloride, copper oxychloride, copper hydroxide, copper oxide or a mixture of these compounds.
- for sulphur starting from: soluble sulphur, micronised sulphur, atomised sulphur or a mixture of these compounds.

The carbonate-substituted hydroxyapatite in itself also has an effect on plants. In fact, it contains elements that contribute to improving the natural resistance of the plant. Calcium in particular is one of the trace elements with which the plant is fed, which participates in balancing plants, activates certain enzyme processes and eliminates certain toxic compounds. Furthermore, the carbonate-substituted hydroxyapatite crystals have their own antibacterial activity.

Also, the absorption of bioactive molecules on the carbonate-substituted hydroxyapatite microcrystals, and the use of carbonate-substituted hydroxyapatite as a carrier of these molecules, leads to a synergic action on the plants for great effectiveness in the plant treatment, in particular for preventing and fighting esca disease of the vines.

For the purposes of the present invention the carbonate-substituted hydroxyapatite carrier functionalized with a bioactive molecule is in the form of aggregates of a plurality of carbonate-substituted hydroxyapatite particles.

For the use according to the invention, carbonate-substituted hydroxyapatite is preferably integrated into a composition, preferably in the form of microcrystalline aggregates. This composition may be in all forms, notably powder, granules, liquid or gel. According to a preferred embodiment, aggregates of carbonate-substituted hydroxyapatite are dispersed in a uniform way in water. The pH of the composition in liquid form is preferably greater than 5 so as to prevent that the microcrystals of the carbonate-substituted hydroxyapatite undergo partial or total hydrolysis.

Such a liquid composition allows foliar application, in particular by spraying. The structure and micrometric size of the carbonate-substituted hydroxyapatite crystals mean that they are dispersed uniformly within the volume of the micronized droplets during spraying, thus allowing good distribution throughout the total volume used for application and consequently more uniform distribution on the application surface. According to the type of atomiser used for the application of the carbonate-substituted hydroxyapatite, it is possible to have droplets whose diameter varies between 50 and 800 $\mu$m. In order to avoid or limit drifting of very small droplets and discharge of very large droplets, and to guarantee better application on the surface to be treated, it is possible to use spraying means that allow droplets sized between 150 and 250 $\mu$m to be obtained.

Once applied, the aggregated particles adhere to the leaf without needing to use anti-stripping agents in the composition. In fact, according to their surface, their size, their morphological irregularities and their electrostatic characteristics, the carbonate-substituted hydroxyapatite crystals cling onto the surface of the leaves, thus ensuring optimal adhesion resistance to run off water, unlike currently existing products that are carried away by rain or dew.

The use of the compositions, applied per hectare, is to be adapted according to the climatic conditions encountered, the season and the protection and nutrition strategies of the soil.

Preferably the compositions contain between 5 and 70% of carbonate-substituted hydroxyapatite and/or aggregates of particles of carbonate-substituted hydroxyapatite, even more preferably between 6 and 60% (as percentage by weight of total solids of the composition).

In the case of an aqueous formulation for foliar application, the carbonate-substituted hydroxyapatite particles and/or aggregates of particles of carbonate-substituted hydroxyapatite are preferably between 2 and 5% by weight of the total weight of the composition.

Preferred dosages are between 2 and 5 kg, preferably 2.5 kg per hectare to 250l/ha in full vegetative development, with a density of about 4000 stem/ha.

An example of a particularly suitable application protocol is:

- Implementation in the autumn before the leaves fall (descending sap) after harvest
- Winter application immediately after the size (same day or next day)
- Spring application before flowering (rising sap)
- application in late June, July and early August after flowering.

A further application may be performed in case of hail.

Once applied to the plant, the bioactive molecules may be directly released or the carbonate-substituted hydroxyapatite microcrystals may transport these substances into the intercellular spaces. Bioactive molecules are thus released by hydrolysis, in proximity to targets, in particular in proximity to target parasites such as fungi and bacteria.

In fact, the microcrystalline aggregates of the carbonate-substituted hydroxyapatite penetrate into the plant according to passive diffusion following the discharge of fluids, such as carbon dioxide and water, through the natural openings of the plant tissues. Inside the plant, the carbonate-substituted hydroxyapatite behaves like a "sol-gel": it is not stagnant in a liquid medium, it moves in the xylem and the phloem by following the circulating lymph. Hence there is no risk of accumulation in the plant.

When the carbonate-substituted hydroxyapatite meets a pathogen, the aggregate decomposes as the more acidic wall of the microorganism promotes dissolution and the release of bioactive molecules carried by the carbonate-substituted hydroxyapatite, which can therefore act against the pathogen.

The bioactive molecules (for example, phosphorus, calcium and carbonate) follow the lymphatic flow and exercise their activity in particular as fertilisers for improving the development of the plant and/or reinforcing its natural defences. Unlike the conventional methods, there is therefore no action on the intracellular metabolic pathways, but a contact action between the functional elements of the carbonate-substituted hydroxyapatite aggregates and the pathogens on an intercellular level or at the surface of the plants.

The active principles and bioactive molecules can therefore act when they are sprayed onto the surface but also in depth into the core of the plant tissues treated. The carbonate-substituted hydroxyapatite particles can also be used for application on the trunk, on the wood of plants or on their roots according to the aim of the application.

According to a second aspect, the invention relates to particular particles of hydroxyapatite for a use such as that described above, i.e. hydroxyapatite particles substituted by at least a carbonate ion having the following formula:

$$Ca_{(10)}(PO_4)_{(6-y)}(CO_3)_y(OH)_2$$

wherein y is a number comprised between 0.002 and 0.030.

The crystallinity degree is defined by the formula provided by Landi et al (J.Eur. Ceram. Soc., 2000, 20, 2377-2387) :

$$CD= (1-X/Y)^*100$$

where:

- Y = the height of maximum diffraction at $2\theta = 33°$
- X = the height of background diffraction at $2\theta = 33°$ of an X-ray particle diffraction diagram.

The carbonate-substituted hydroxyapatite according to the invention has a crystallinity degree CD comprised between 25 and 59%, preferably between 25 and 40%.

The carbonate substitution ion can occupy two sites in the hydroxyapatite of natural origin:

- Site A substitution of the OH hydroxyl ion, and/or
- Site B substitution of the $PO_4{}^{3-}$ phosphate ion.

The carbonate-substituted hydroxyapatite according to the invention comprises from 1 to 20%, preferably from 5 to 15% in weight of hydroxyapatite substituted by a carbonate ion of the total of the hydroxyapatite structure.

In the hydroxyapatite structure considered in the present invention, the substitution is preferably on site B.

The ratio of substitution on site A / substitution on site B is comprised between 0.10 and 0.60 and even more preferably the ratio is comprised between 0.20 and 0.40.

Furthermore, the carbonate-substituted hydroxyapatite according to the invention has a high carbonate ion substitution rate since the substitution in carbonate ions on site B is greater than or equal to 55% in weight, even more preferably comprised between 90 and 100% in weight, of the total weight of carbonate contained in the hydroxyapatite.

These carbonate ion substitution parameters at site B are very significant since they allow the whole hydroxyapatite structure to increase its solubility in a biological environment.

Preferably, the carbonate-substituted hydroxyapatite particles according to the invention are particles smaller than 2 $\mu$m, preferably sized between 0.2 and 0.9 $\mu$m. They are preferably in crystalline form. The microcrystalline carbonate-substituted hydroxyapatite aggregates according to the present invention have a surface area comprised between 60 and 120 $m^2$/g, more particularly between 70 and 90 $m^2$/g.

The carbonate-substituted hydroxyapatite aggregates in themselves have a pH that is subject to variations over time and that also varies according to the molecules adsorbed thereto. For example, the carbonate-substituted hydroxyapatite crystals according to the invention functionalised with copper sulfate have a pH comprised between 3 and 4.5. However, when the carbonate-substituted hydroxyapatite microcrystals are put into solution, the pH of the solution must be greater than 5 to maintain the structural and functional stability of the carbonate-substituted hydroxyapatite. The pH of the solution is preferably comprised between 5.5 and 7.5.

According to another aspect, the invention relates to carbonate-substituted hydroxyapatite particles functionalised by at least one bioactive substance. In other words, the invention refers to a carrier of carbonate-substituted hydroxyapatite particles (or aggregates) comprising bioactive molecules adsorbed thereto. Preferably the invention refers to a carbonate-substituted hydroxyapatite comprising copper ions and/or one sulphur ions and/or zinc ions adsorbed thereto. Preferably, the carbonate-substituted hydroxyapatite further contains essential oils one or more essential oil(s) of plant origin such as mint, thyme, rosemary, sesame, soya, cloves, garlic, lemon or cinnamon.

The invention also relates to aggregates of carbonate-substituted hydroxyapatite particles as described above. These clusters have a size comprised between 0.5 and 25 $\mu$m, preferably comprised between 0.5 and 5 $\mu$m.

The invention also relates to a composition comprising at least one carbonate-substituted hydroxyapatite particle or at least one aggregate of hydroxyapatite particles according to the invention. Preferably, such a composition comprises between 5 and 70% in weight of carbonate-substituted hydroxyapatite particles and/or aggregates in relation to the total weight of the dry material of the composition, even more preferably between 6 and 60%.

The invention is now illustrated by manufacturing process examples, composition examples and uses examples.

Manufacturing example 1

The carbonate-substituted hydroxyapatite is synthesised by mixing phosphoric acid with a composition comprising calcium hydroxide and calcium carbonate previously dispersed in a suitable quantity of water.

The reaction requires about 12 to 48 hours, more particularly about 15 to 30 hours. Following the suspension of microcrystals a solution of copper (II) sulfate pentahydrate and copper (II) chloride is added, previously dissolved in a suitable quantity of water.

Once these two solutions are combined, they are mixed to allow adsorption of copper ions in the inorganic crystals of the carbonate-substituted hydroxyapatite.

The functionalization reaction by the copper solution takes about 12 to 72 hours, more particularly from 24 to 60 hours.

Manufacturing example 2

The carbonate-substituted hydroxyapatite is synthesised by mixing phosphoric acid with a composition comprising calcium hydroxide and calcium carbonate, previously dispersed in a suitable quantity of water.

The reaction requires about 12 to 48 hours, more particularly about 15 to 30 hours.

Following the suspension of microcrystals, a suspension of sulphur and micronized sulphur dispersed in a suitable volume of water is added.

Once these two solutions are combined, they are mixed to allow adsorption of sulphur ions in the inorganic crystals of carbonate-substituted hydroxyapatite.

The reaction requires about 2 to 10 hours, more particularly about 4 to 6 hours.

Manufacturing example 3

The carbonate-substituted hydroxyapatite is synthesised by mixing phosphoric acid with a composition comprising calcium hydroxide and calcium carbonate, previously dispersed in a suitable quantity of water.

The reaction requires about 12 to 48 hours, more particularly about 15 to 30 hours. Following the suspension of microcrystals, a suspension of essential oils dispersed in a suitable volume of water is added.

Once these two solutions are combined, they are mixed to allow adsorption of essential oils in the inorganic crystals of carbonate-substituted hydroxyapatite.

The reaction requires about 2 to 10 hours, more particularly about 4 to 6 hours.

Composition examples

A sulphur based composition may comprise the following formulation:

- Sulphur hydroxyapatite 60% (carbonate-substituted hydroxyapatite with sulphur ions adsorbed thereto)
- Distilled water 32.9%
- Xanthan gum 1%
- Glycerine 4%
- Benzoic acid 2%

A copper based composition may comprise the following formulation:

- Copper hydroxyapatite 10% (carbonate-substituted hydroxyapatite with copper ions adsorbed thereto)
- Distilled water 78%
- Xanthan gum 1%
- Glycerine 4%
- Benzoic acid 1.5%

A composition according to the invention may also be a composition comprising a mixture of the two compositions previously described.

An essential oils and copper based composition may comprise the following formulation:

- Copper hydroxyapatite 10% (carbonate-substituted hydroxyapatite with copper ions adsorbed thereto)
- carbonate-substituted hydroxyapatite functionalized with essential oils 10%
- Distilled water 68%
- Xanthan gum 1%
- Glycerine 4%
- Benzoic acid 1.5%

Example of use

In order to optimise the functional properties and structural stability of the liquid compositions comprising the hydroxyapatite particles, a use can be implemented according to the following recommendations in particular:

- Shaking the composition before use to put the particles and/or aggregates of particles back in suspension in the composition;
- Using an atomiser that ensures complete and uniform wetting of the vegetation and prevents too low or too high volumes;
- Using quantities of water ranging from 60L/ha to 250L/ha on fully developed plants, avoiding excessive amounts of water which create run off;
- Reducing the amount of product per hectare in the event of manual application;
- Controlling the pH of the solution in water so that it is greater than 5.

Experimental test data

Results of the efficacy test of the sample MDE against the Esca (grapevine trunk disease-GTDs) agents.

Sample MDE is constituted of water, natural extracts of vegetal origin and carbonate-substituted hydroxyapatite functionalised by copper sulfate (Cu 45 g/kg);

Three samples (testing agent), MDE1, MDE2 and MDE3, based on carbonate-substituted hydroxyapatite (HCA), were tested in vitro against the main pathogens related to GTDs, Phaeoacremonium aleophilum (Pal), Phaeomoniella chlamydospora (Pch) and Fomitiporia mediterranea (Fm). The test was performed by the Dep. of Agricultural Science, University of Bologna, using own isolation prepared from infected vines.

The protocol consisted on the pathogens growth in a proper media (PDA, Difco) as untreated sample, and the same media with 3 different concentrations of the testing agents, 2.5%, 5% and 10%; and the same media with the Bordeaux mixture based on copper (p.a. 0.02%) as comparison agent.

The first day (0) each pathogen was inoculated by placing a colony (0.5 cm diam.) in the centre of petri dishes (6 cm diam.) containing the media already prepared with the testing agents. Petri dishes were closed by Parafilm and placed into an incubation chamber at 22 $\pm$ 1°C alternating light/dark during the incubation period.

Per each pathogen 11 petri dishes were prepared (3 samples x 3 concentrations + 2 controls) and per one of each, 10 replications.

The measurement of the diameter of colonization was done weekly. Deducing to these values, the nominal value of 0.5 cm correspondent to the initial colony inoculated, the effective colony growth was obtained. The efficacy index per each product was calculated considering the effective fungal colony growth, applying the formula below:

$$E = \frac{[\text{value of growth (sample211) - value of growth (sample1)}]}{\text{value of growth (sample1)}} \times 100$$

where sample 1 = control

In the table 1, 2 and 3, the measures of the colony growth are summarised, referred to the diameter of growth of each pathogen after the incubation period on the PDA media without any agent and add of each testing agent in 3 different concentrations and the comparison agent. Next to these, their efficacy values are reported.

In the table 1 the average diameter and the efficacy value are listed for Fomitiporia mediterranea after 7 and 14 days of incubations.

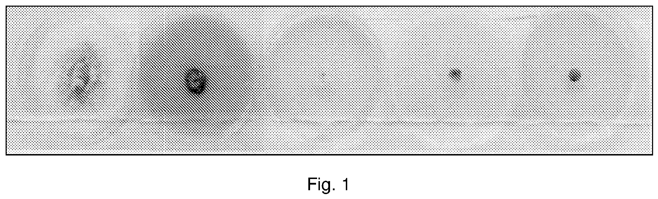

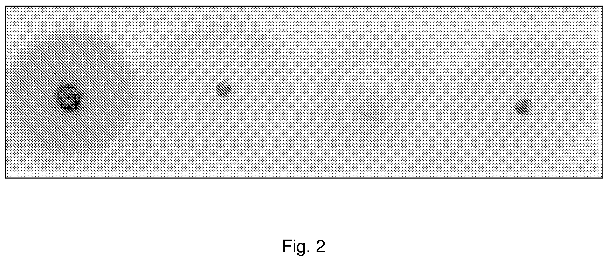

All the testing agents have completely inhibited the fungal growth in all concentrations tested and during the entire period of incubation. Especially the samples MDE1 and MDE3 were efficacy at 100% against Fomitiporia mediterranea in all concentrations tested and during the entire period of incubation (Fig 1). The efficacy of MDE2 was lower at the lower concentration (Fig. 2).

Tab. 1 Diameters (diam.) in cm, of Fomitiporia mediterranea (Fm) colony on PDA containing the 3 testing agents at 3 concentrations 2.5%, 5% and 10%; detecting, after 7 days and 14 days of incubation, the efficacy (E) in %. As control agents, a PDA without any agent and a PDA with an agent based on copper 0.02% p.a., were used.

| Fm | control | comparison ag. | | MDE1 | | MDE2 | | MDE3 | |
|---|---|---|---|---|---|---|---|---|---|
| | diam | diam | E | diam | E | diam | E | diam | E |
| **2.5%** | | | | | | | | | |
| 7 days | 1.70 | 0.52 | **98.33** | 0.50 | **100** | 0.60 | **91.67** | 0.50 | **100** |
| 14 days | 4.45 | 0.70 | **94.94** | 0.50 | **100** | 1.00 | **87.34** | 0.50 | **100** |

(continued)

| | diam | diam | E | diam | E | diam | E | diam | E |
|---|---|---|---|---|---|---|---|---|---|
| **5%** | | | | | | | | | |
| 7 days | 1.70 | 0.52 | **98.33** | 0.50 | **100** | 0.50 | **100** | 0.50 | **100** |
| 14 days | 4.45 | 0.70 | **94.94** | 0.50 | **100** | 0.50 | **100** | 0.50 | **100** |
| **10%** | | | | | | | | | |
| 7 days | 1.70 | 0.52 | **98.33** | 0.50 | **100** | 0.50 | **100** | 0.50 | **100** |
| 14 days | 4.45 | 0.70 | **94.94** | 0.50 | **100** | 0.50 | **100** | 0.50 | **100** |

Fig. 1 shows the efficacy against Fomitiporia mediterranea (Fm) after 15 days of incubation with testing agents at concentration = 5%; it was reported the totally inhibition of the colony growth comparing to the control and the comparison agent based on copper. From left: control, Bordeaux mixture, MDE1, MDE2 and MDE3.

Fig. 2 shows the efficacy against Fomitiporia mediterranea (Fm) after 15 days of incubation with testing agents at concentration = 2.5%; it was reported the totally inhibition of the colony growth comparing to the control and the comparison agent based on copper. From left: control, Bordeaux mixture, MDE1, MDE2 and MDE3.

In the table 2 the average diameter and the efficacy value are listed for Phaeomoniella chlamydospora (Pch) after 7, 14 and 21 days of incubations.

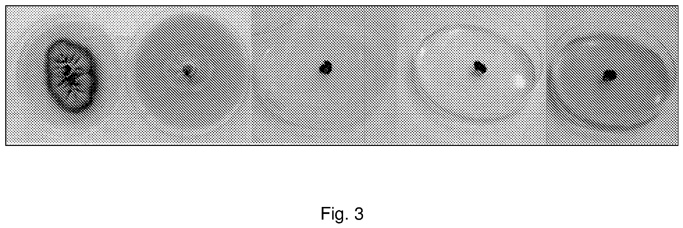

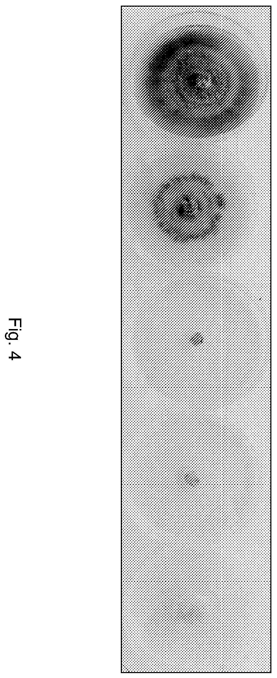

All the testing agents have completely inhibited the fungal growth after 7 days of incubation and in particular the sample MDE1 in all the concentration tested. All the testing agents were efficacy at 100% against Phaeomoniella chlamydospora (Pch) at the concentration of 10%. (Fig. 3). The efficacy of MDE2 was lower but always over than 80% at the concentrations of 2.5% and 5% (Fig. 4).

Tab. 2 Diameters (diam.) in cm, of Phaeomoniella chlamydospora (Pch) colony on PDA containing the 3 testing agents at 3 concentrations 2.5%, 5% and 10%; detecting, after 7, 14 and 21 days of incubation, the efficacy (E) in %. As control agents, a PDA without any agent and a PDA with an agent based on copper 0.02% p.a., were used.

| **Fm** | control | comparison ag. | | MDE1 | | MDE2 | | MDE3 | |
|---|---|---|---|---|---|---|---|---|---|
| | diam | diam | E | diam | E | diam | E | diam | E |
| **2.5%** | | | | | | | | | |
| 7 days | 1.49 | 1.42 | **6.97** | 0.50 | **100** | 0.50 | **100** | 0.50 | **100** |
| 14 days | 2.82 | 2.20 | **26.79** | 0.50 | **100** | 0.66 | **93.11** | 0.50 | **100** |
| 21 days | 4.80 | 2.66 | **49.77** | 0.50 | **100** | 1.24 | **82.79** | 0.58 | **98.14** |
| **5%** | | | | | | | | | |
| 7 days | 1.49 | 1.42 | **6.97** | 0.50 | **100** | 0.50 | **100** | 0.50 | **100** |
| 14 days | 2.82 | 2.20 | **26.79** | 0.50 | **100** | 0.51 | **99.57** | 0.50 | **100** |
| 21 days | 4.80 | 2.66 | **49.77** | 0.50 | **100** | 0.56 | **98.60** | 0.50 | **100** |
| **10%** | | | | | | | | | |
| 7 days | 1.49 | 1.42 | **6.97** | 0.50 | **100** | 0.50 | **100** | 0.50 | **100** |
| 14 days | 2.82 | 2.20 | **26.79** | 0.50 | **100** | 0.50 | **100** | 0.50 | **100** |

Fig. 3 shows the efficacy against Phaeomoniella chlamydospora (Pch) after 15 days of incubation with testing agents at concentration = 10%. From left: control, Bordeaux mixture, MDE2, MDE3 and MDE1.

Fig. 4 shows the efficacy against Phaeomoniella chlamydospora (Pch) after 21 days of incubation with testing agents at concentration = 2.5%; it was reported the totally inhibition of the colony growth comparing to the control and the comparison agent based on copper. From left: control, Bordeaux mixture, MDE1, MDE3 and MDE2.

In the table 3 the average diameter and the efficacy value are listed for Phaeoacremonium aleophilum (Pal), after 14, 21 and 28 days of incubations.

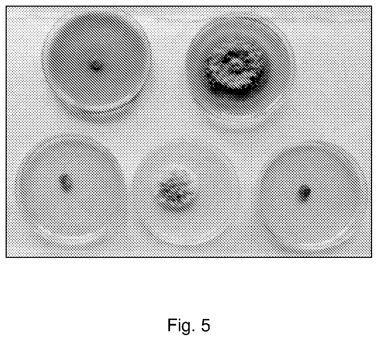

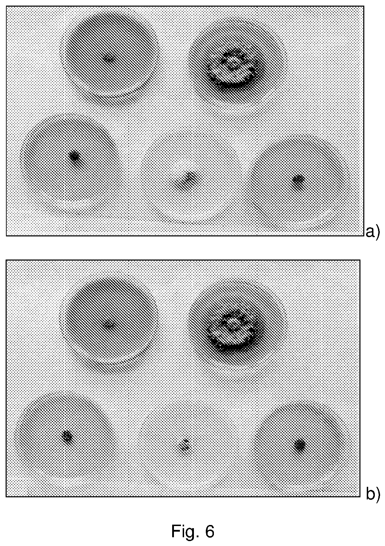

MDE1 and MDE3 have completely inhibited the fungal growth after 28 days of incubation (Fig. 5, 6a, 6b), while MDE2 has highly reduced the pathogen at the last assessment (28th day) and at 10% of concentration. The efficacy of MDE2 is lower but always over than 80% at the concentration of 5%, while at 2.5% the same result is achieved in 28 days.

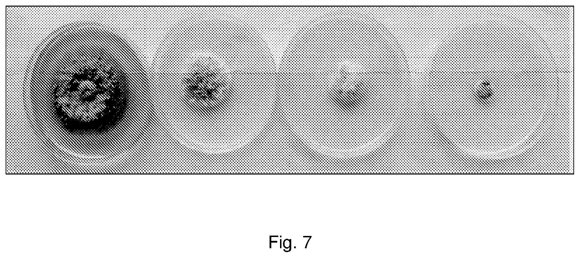

MDE2 even if was not able to inhibit completely the colony; it was responsible to the significant alteration on the colony aspect (Fig. 7), which remains alive.

Tab. 3 Diameters (diam.) in cm, Phaeoacremonium aleophilum (Pal) colony on PDA containing the 3 testing agents at 3 concentrations 2.5%, 5% and 10%; detecting, after 7, 14, 21 and 28 days of incubation, the efficacy (E) in %. As control agents, a PDA without any agent and a PDA with an agent based on copper 0.02% p.a., were used.

| Fm | control | comparison ag. | | MDE1 | | MDE2 | | MDE3 | |
|---|---|---|---|---|---|---|---|---|---|
| | diam | diam | E | diam | E | diam | E | diam | E |
| 2.5% | | | | | | | | | |
| 7 days | 1.33 | 0.50 | **100** | 0.50 | **100** | 0.57 | **94.74** | 0.50 | **100** |
| 14 days | 2.25 | 0.66 | **92.89** | 0.50 | **100** | 0.97 | **79.11** | 0.50 | **100** |
| 21 days | 3.21 | 1.12 | **80.69** | 0.50 | **100** | 1.53 | **67.91** | 0.50 | **100** |
| 28 days | 3.94 | 1,64 | **71.07** | 0.50 | **100** | 1.97 | **62.69** | 0.50 | **100** |
| 5% | | | | | | | | | |
| 7 days | 1.33 | 0.50 | **100** | 0.50 | **100** | 0.53 | **97.74** | 0.50 | **100** |
| 14 days | 2.25 | 0.66 | **92.89** | 0.50 | **100** | 0.66 | **92.89** | 0.50 | **100** |
| 21 days | 3.21 | 1.12 | **80.69** | 0.50 | **100** | 0.86 | **88.89** | 0.50 | **100** |
| 28 days | 3.94 | 1,64 | **71.07** | 0.50 | **100** | 1.26 | **80.71** | 0.50 | **100** |
| 10% | | | | | | | | | |
| 7 days | 1.33 | 0.50 | **100** | 0.50 | **100** | 0.50 | **100** | 0.50 | **100** |
| 14 days | 2.23 | 0.66 | **92.89** | 0.50 | **100** | 0.50 | **100** | 0.50 | **100** |
| 21 days | 3.21 | 1.12 | **80.69** | 0.50 | **100** | 0.52 | **99.38** | 0.50 | **100** |
| 28 days | 3.94 | 1,64 | **71.07** | 0.50 | **100** | 0.58 | **97.97** | 0.50 | **100** |

Fig. 5 shows the efficacy against Phaeoacremonium aleophilum (Pal) after 28 days of incubation with testing agents at concentration = 2.5%. From left (over): Bordeaux mixture and control; (under) MDE1, MDE2, MDE3.

Fig. 6 shows the efficacy against Phaeoacremonium aleophilum (Pal) after 28 days of incubation with testing agents at concentration = 5% (a) and 10% (b). From left (over): Bordeaux mixture and control; (under) MDE1, MDE2, MDE3.

Fig. 7 shows the reduction on the growth of Phaeoacremonium aleophilum (Pal) after 28 days of incubation with MDE2 at growing concentration from left in comparison with the control (left).

In conclusion, all the three samples tested, MDE1, MDE2, MDE3, by the present vitro test, were efficacy against the three fungal pathogens related to Esca disease of grapevine (GTDs), inhibiting their growth in the majority thesis in comparison.

## Claims

1. Use of at least one substituted hydroxyapatite particle comprising at least one bioactive molecule, or of a composition containing it, for the prevention and treatment of grapevine trunk disease, preferably esca disease of the vines, wherein the hydroxyapatite particle is substituted with at least a carbonate ion; and
wherein the bioactive molecule is an ion selected from Cu, Zn, S, P, Ca, or essential oils of plant origin, or mixture thereof; and
wherein the bioactive molecule is adsorbed on the substituted hydroxyapatite.

2. The use according to claim 1, wherein essential oils of plant origin are selected from mint, thyme, rosemary, sesame, soya, cloves, garlic, lemon or cinnamon.

3. The use according to claim 1 or 2, wherein the hydroxyapatite particle is substituted by at least a carbonate ion corresponding to the formula:

$$Ca_{(10)}(PO_4)_{(6-y)}(CO_3)_y(OH)_2$$

wherein y is a number comprised between 0.002 and 0.6,
and having a crystallinity degree comprised between 25 and 59%, preferably between 25 and 40%.

4. The use according to any one of claims 1 to 3, **characterised in that** the carbonate substitution is on the phosphate site (B) and/or on the hydroxyl site (A).

5. The use according to claim 4, wherein the ratio A/B between a carbonate substitution on the hydroxyl site (A) and a carbonate substitution on the phosphate site (B) of the hydroxyapatite is comprised between 0.1 and 0.6.

6. The use according to anyone of the previous claims, wherein the hydroxyapatite particle is smaller than 2 $\mu$m.

7. The use according to anyone of the previous claims, **characterised in that** the hydroxyapatite particle is used in the form of aggregates of a plurality of hydroxyapatite particles.

8. The use according to one of the previous claims, **characterised in that** the hydroxyapatite particle is applied to the plants in a liquid composition, optionally as a spray onto the leaves, trunk, wood or roots of the plants to be treated.

9. A hydroxyapatite particle substituted by at least a carbonate ion corresponding to the formula:

$$Ca_{(10)}(PO_4)_{(6-y)}(CO_3)_y(OH)_2$$

wherein y is a number comprised between 0.002 and 0.6, and
having a crystallinity degree comprised between 25 and 59%, in combination with at least one bioactive substance, wherein the bioactive substance is an ion selected from Cu, Zn, S, P, Ca or essential oils of plant origin, or mixture thereof; and
wherein the bioactive substance is adsorbed on the substituted hydroxyapatite.

10. The particle according to claim 9, wherein the essential oil of plant origin is chosen in the group consisting of mint, thyme, rosemary, sesame, soya, cloves, garlic, lemon, cinnamon and mixture thereof.

11. An aggregate of hydroxyapatite particles, **characterised in that** it comprises hydroxyapatite particles according to claim 9 or 10 aggregated to one another.

12. The aggregate according to claim 11, **characterised in that** it has a developed surface area comprised between 60 and 120 m$^2$/g.

13. A composition comprising at least one carbonate-substituted hydroxyapatite particle according to claim 9 or 10 or an aggregate according to claim 11 or 12.

14. The composition according to claim 13, **characterised in that** it comprises between 5 and 70% in weight of carbonate-substituted hydroxyapatite particles according to claim 9 or 10 and/or aggregates according to anyone of claims 11 to 13 in relation to the total weight of dry material of the composition.

**Patentansprüche**

1. Verwendung mindestens eines substituierten Hydroxylapatit-Partikels, umfassend mindestens ein bioaktives Molekül, oder einer Zusammensetzung, die dieses enthält, zur Vorbeugung und Behandlung von Holzkrankheiten der Weinrebe, vorzugsweise Esca-Krankheit der Reben,
wobei das Hydroxylapatit-Partikel mit mindestens einem Carbonation substituiert ist; und wobei das bioaktive Molekül ein Ion ist, das aus Cu, Zn, S, P, Ca oder ätherischen Ölen pflanzlichen Ursprungs oder Mischung davon ausgewählt ist; und
wobei das bioaktive Molekül an dem substituierten Hydroxylapatit adsorbiert ist.

2. Verwendung nach Anspruch 1, wobei ätherische Öle pflanzlichen Ursprungs aus Minze, Thymian, Rosmarin, Sesam, Soja, Nelken, Knoblauch, Zitrone oder Zimt ausgewählt sind.

3. Verwendung nach Anspruch 1 oder 2, wobei das Hydroxylapatit-Partikel durch mindestens ein Carbonation der Formel

$$Ca_{(10)}(PO_4)_{(6-y)}(CO_3)_y(OH)_2$$

substituiert ist, wobei y eine Zahl zwischen 0,002 und 0,6 ist,
und aufweisend einen Kristallinitätsgrad zwischen 25 und 59%, vorzugsweise zwischen 25 und 40%.

4. Verwendung nach einem der Ansprüche 1 bis 3, **dadurch gekennzeichnet, dass** die Carbonatsubstitution an der Phosphatstelle (B) und/oder an der Hydroxylstelle (A) erfolgt.

5. Verwendung nach Anspruch 4, wobei das Verhältnis A/B zwischen einer Carbonatsubstitution an der Hydroxylstelle (A) und einer Carbonatsubstitution an der Phosphatstelle (B) des Hydroxylapatits zwischen 0,1 und 0,6 liegt.

6. Verwendung nach einem der vorhergehenden Ansprüche, wobei das Hydroxylapatit-Partikel kleiner als 2 $\mu$m ist.

7. Verwendung nach einem der vorhergehenden Ansprüche, **dadurch gekennzeichnet, dass** das Hydroxylapatit-Partikel in Form von Aggregaten einer Vielzahl an Hydroxylapatit-Partikeln verwendet wird.

8. Verwendung nach einem der vorhergehenden Ansprüche, **dadurch gekennzeichnet, dass** das Hydroxylapatit-Partikel in einer flüssigen Zusammensetzung auf die Pflanzen, gegebenenfalls als Spray auf die Blätter, Stamm, Holz oder Wurzeln der zu behandelnden Pflanzen, aufgetragen wird.

9. Hydroxylapatit-Partikel, substituiert durch mindestens ein Carbonation entsprechend der Formel

$$Ca_{(10)}(PO_4)_{(6-y)}(CO_3)_y(OH)_2$$

wobei y eine Zahl zwischen 0,002 und 0,6 ist und aufweisend einen Kristallinitätsgrad zwischen 25 und 59%, in Kombination mit mindestens eines bioaktiven Stoffes, wobei der bioaktive Stoff ein Ion ist, das aus Cu, Zn, S, P, Ca oder ätherischen Ölen pflanzlichen Ursprungs oder Mischung davon ausgewählt ist; und wobei der bioaktive Stoff an dem substituierten Hydroxylapatit adsorbiert ist.

10. Partikel nach Anspruch 9, wobei das ätherische Öl pflanzlichen Ursprungs aus der Gruppe ausgewählt ist, die aus Minze, Thymian, Rosmarin, Sesam, Soja, Nelken, Knoblauch, Zitrone, Zimt und einer Mischung davon besteht.

11. Aggregat aus Hydroxylapatit-Partikeln, **dadurch gekennzeichnet, dass** es Hydroxylapatit-Partikel nach Anspruch 9 oder 10 umfasst, die miteinander aggregiert sind.

12. Aggregat nach Anspruch 11, **dadurch gekennzeichnet, dass** es eine entwickelte Oberfläche zwischen 60 und 120 m$^2$/g aufweist.

13. Zusammensetzung, umfassend mindestens ein carbonatsubstituiertes Hydroxylapatit-Partikel nach Anspruch 9 oder 10 oder ein Aggregat nach Anspruch 11 oder 12.

14. Zusammensetzung nach Anspruch 13, **dadurch gekennzeichnet, dass** sie zwischen 5 und 70 Gew.-% carbonatsubstituierte Hydroxylapatit-Partikel nach Anspruch 9 oder 10 und/oder Aggregate nach einem der Ansprüche 11 bis 13 bezogen auf das Gesamtgewicht vom Trockenmaterial der Zusammensetzung enthält.

## Revendications

1. Utilisation d'au moins une particule d'hydroxyapatite substituée comprenant au moins une molécule bioactive, ou d'une composition la contenant, destinée à la prévention et au traitement de maladies du bois de la vigne, de préférence les maladies de l'esca de la vigne,
dans laquelle la particule d'hydroxyapatite est substituée par au moins un ion carbonate ; et dans laquelle la molécule bioactive est un ion choisi parmi le Cu, Zn, S, P, Ca ou des huiles essentielles d'origine végétale, ou leurs mélanges ; et

dans laquelle la molécule bioactive est absorbée sur l'hydroxyapatite substituée.

2. Utilisation selon la revendication 1, dans laquelle les huiles essentielles d'origine végétale sont choisies parmi la menthe, le thym, le romarin, le sésame, le soja, les clous de girofle, l'ail, le citron ou la cannelle.

3. Utilisation selon la revendication 1 ou 2, dans laquelle la particule d'hydroxyapatite est substituée par au moins un ion carbonate correspondant à la formule :

$$Ca_{(10)}(PO_4)_{(6-y)}(CO_3)_y(OH)_2$$

où y est un nombre compris entre 0,002 et 0,6,
et possède un degré de cristallinité compris entre 25 et 59 %, de préférence entre 25 et 40 %.

4. Utilisation selon l'une quelconque des revendications de 1 à 3, **caractérisée en ce que** la substitution carbonate est sur le site phosphate (B) et/ou sur le site hydroxyle (A).

5. Utilisation selon la revendication 4, dans laquelle le rapport A/B entre une substitution carbonate sur le site hydroxyle (A) et une substitution carbonate sur le site phosphate (B) de l'hydroxyapatite est compris entre 0,1 et 0,6.

6. Utilisation selon l'une quelconque des revendications précédentes, dans laquelle la particule d'hydroxyapatite est inférieure à 2 $\mu$m.

7. Utilisation selon l'une quelconque des revendications précédentes, **caractérisée en ce que** la particule d'hydroxyapatite est utilisée sous forme d'agrégats d'une pluralité de particules d'hydroxyapatite.

8. Utilisation selon l'une des revendications précédentes, **caractérisée en ce que** la particule d'hydroxyapatite est appliquée aux plants dans une composition liquide, éventuellement sous forme de pulvérisation sur les feuilles, le tronc, le bois ou les racines des plants à traiter.

9. Particule d'hydroxyapatite substituée par au moins un ion carbonate correspondant à la formule :

$$Ca_{(10)}(PO_4)_{(6-y)}(CO_3)_y(OH)_2$$

dans laquelle y est un nombre compris entre 0,002 et 0,6, et ayant un degré de cristallinité compris entre 25 et 59 %, en combinaison avec au moins une substance bioactive, dans laquelle la substance bioactive est un ion choisi parmi le Cu, Zn, S, P, Ca ou des huiles essentielles d'origine végétale ou leurs mélanges ; et dans laquelle la substance bioactive est absorbée sur l'hydroxyapatite substituée.

10. Utilisation selon la revendication 9, dans laquelle les huiles essentielles d'origine végétale sont choisies dans le groupe consistant en de la menthe, du thym, du romarin, du sésame, du soja, des clous de girofle, de l'ail, du citron ou de la cannelle et leurs mélanges.

11. Agrégat de particules d'hydroxyapatite, **caractérisé en ce qu'**il comprend des particules d'hydroxyapatite selon la revendication 9 ou 10 agrégées les unes aux autres.

12. Agrégat selon la revendication 11, **caractérisé en ce qu'**il possède une surface développée comprise entre 60 et 120 m$^2$/g.

13. Composition comprenant au moins une particule d'hydroxyapatite, substituée avec un carbonate selon la revendication 9 ou 10, ou un agrégat selon la revendication 11 ou 12.

14. Composition selon la revendication 13, **caractérisée en ce qu'**elle comprend entre 5 et 70 % en poids de particules d'hydroxyapatite substituée avec un carbonate selon la revendication 9 ou 10 et/ou des agrégats selon l'une quelconque des revendications de 11 à 13 par rapport au poids total de matière sèche de la composition.

Fig. 1

Fig. 2

Fig. 3

Fig. 4

Fig. 5

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0556105 B
- EP 0640284 A
- EP 2029480 A

**Non-patent literature cited in the description**

- **PLATZER et al.** In vitro-Wirkung von Fungiziden auf F. mediterranea & P. chlamydospora, Erreger der Esca-Krankheit der Rebe. *Mitteil. Klosterneuburg Rebe & Wein, Obstbau & Früchtenverwert,* 01 January 2009, vol. 59 (2), 74-83
- **LANDI et al.** *J.Eur. Ceram. Soc.,* 2000, vol. 20, 2377-2387